Europäisches Patentamt

European Patent Office

Office européen des brevets

(11) Veröffentlichungsnummer: **0 355 616**
**A2**

(12) # EUROPÄISCHE PATENTANMELDUNG

(21) Anmeldenummer: **89114878.5**

(22) Anmeldetag: **11.08.89**

(51) Int. Cl.⁴: **F16N 7/36 , F16N 27/00**

(30) Priorität: **13.08.88 DE 8810291 U**

(43) Veröffentlichungstag der Anmeldung:
**28.02.90 Patentblatt 90/09**

(84) Benannte Vertragsstaaten:
**CH DE FR GB LI**

(71) Anmelder: **LEYBOLD AKTIENGESELLSCHAFT**
**Wilhelm-Rohn-Strasse 25**
**D-6450 Hanau 1(DE)**

(72) Erfinder: **Schütz, Günter**
**Luisenstrasse 2A**
**D-5000 Köln 21(DE)**
Erfinder: **Schwarz, Jörg**
**Saarstrasse 84**
**D-5000 Köln 40(DE)**

(74) Vertreter: **Leineweber, Jürgen, Dipl.-Phys.**
**Nagelschmiedshütte 8**
**D-5000 Köln 40(DE)**

(54) **Welle mit zentralem Kanal.**

(57) Die Erfindung bezieht sich auf eine Welle (3) mit einem zentralen Kanal (8) für die Versorgung von Wellenlagern (5, 6, 7) mit Öl und mit einer im Bereich eines Wellenlagers (2) befindlichen Ölaustrittsöffnung (9); um das Wellenlager (2) dosiert mit Öl versorgen zu können, wird vorgeschlagen, daß dem Wellenlager (5, 6, 7) eine Abdeckung (14) zugeordnet ist, die einen zylindrischen Abschnitt (11) aufweist, welcher die Welle (3) berührungslos umfaßt und den Ringspalt zwischen dem feststehenden (7) und dem rotierenden (5) Lagerring überdeckt, daß der zylindrische Abschnitt (11) über einen Teil seines Umfanges eine vergrößerte Höhe (h) hat und daß sich die Ölaustrittsöffnung zwischen dem unteren (12') und dem oberen (12") Teil des nach innen gerichteten Randes der Abdeckung befindet.

FIG. 4

## Welle mit zentralem Kanal

Die Erfindung bezieht sich auf eine Welle mit einem zentralen Kanal für die Versorgung von Wellenlagern mit Öl und mit einer im Bereich eines Wellenlagers befindlichen Ölaustrittsöffnung.

Wellen dieser Art stützen sich üblicherweise über zwei Lager in einem Lagergehäuse ab. Der zentrale Kanal ist als Sackbohrung ausgebildet. Der in einer Stirnseite der Welle gelegenen Öffnung des Kanals wird Schmieröl zugeführt. In Höhe der Lager sind Radialbohrungen (Ölaustrittsöffnungen) vorgesehen, über die Öl infolge der Zentrifugalkräfte in die Lager gelangt. Der zentrale Kanal erstreckt sich deshalb mindestens bis zu dem der Ölaufnahme abgewandten Lager. In der Regel werden Wellen dieser Art in vertikaler Lage betrieben. Die Ölaufnahme befindet sich am unteren Ende der Welle. Der Ölaufnahme ist z. B. ein Ölsumpf zugeordnet, aus dem das Öl durch die untere Öffnung dem zentralen Kanal zugeführt wird. Insbesondere das obere Lager einer solchen Anordnung ist durch fallende Schmutzpartikel gefährdet.

Der Einsatz von Wellen der beschriebenen Art ist z. B. bei Turbomolekularvakuumpumpen bekannt. Turbomolekularvakuumpumpen werden mit sehr hohen Drehzahlen betrieben (40.000 Umdrehungen pro Minute und mehr). An die Ölschmierung der Wälzlager sind deshalb hohe Anforderungen zu stellen. Zum einen dürfen keine Schmutzpartikel in den Ölstrom gelangen; zum anderen muß die den Lagern zugeführte Ölmenge exakt dosiert sein. Die durch den zentralen Kanal in der Welle zur Ölaustrittsöffnung geförderte Ölmenge ist üblicherweise zu groß.

Der vorliegenden Erfindung liegt die Aufgabe zugrunde, eine Welle der eingangs genannten Art zu schaffen, bei der zum einen zumindest das der Ölaufnahme abgewandte Lager gegen den Eintritt von Schmutzpartikeln geschützt ist und zum anderen die dem Lager zugeführte Ölmenge dosierbar ist.

Erfindungsgemäß wird diese Aufgabe dadurch gelöst, daß dem Wellenlager eine Abdeckung zugeordnet ist, die einen zylindrischen Abschnitt mit einem nach innen gerichteten Rand aufweist, welcher die Welle berührungslos umfaßt und den Ringspalt zwischen dem feststehenden und dem rotierenden Lagerring überdeckt, daß der zylindrische Abschnitt über einen Teil seines Umfanges eine vergrößerte Höhe hat und daß sich die Ölaustrittsöffnung zwischen dem unteren und dem oberen Teil des sich nach innen erstreckenden Randes der Abdeckung befindet. Dadurch, daß der nach innen gerichtete Rand den Ringspalt zwischen dem feststehenden und dem rotierenden Lagerring überdeckt, ist das Lager weitestgehend vor eindringenden Schmutzpartikeln geschützt. Infolge der Erhöhung des zylindrischen Abschnittes über einen Teil seines Umfanges entsteht ein sich über einen Teilumfang erstreckendes Ölfangsegment. Das aus der mit der Welle rotierenden Ölaustrittsöffnung abgespritzte und in dieses Ölfangsegment gelangende Öl wird dem Lager zugeführt. Die übrige Ölmenge wird nach außen abgespritzt. Die zum Lager gelangende Ölmenge ist von der Umfangserstreckung des Ölfangsegmentes abhängig und deshalb damit dosierbar.

Weitere Vorteile und Einzelheiten der Erfindung sollen anhand von in den Figuren 1 bis 4 dargestellten Ausführungsbeispielen erläutert werden. Es zeigen

- Figuren 1 und 3 Schnitte durch eine vertikale Welle im Bereich des oberen Wälzlagers sowie durch erfindungsgemäß gestaltete Abdeckungen und

- Figuren 2 und 4 Ansichten von erfindungsgemäß gestalteten Abdeckungen.

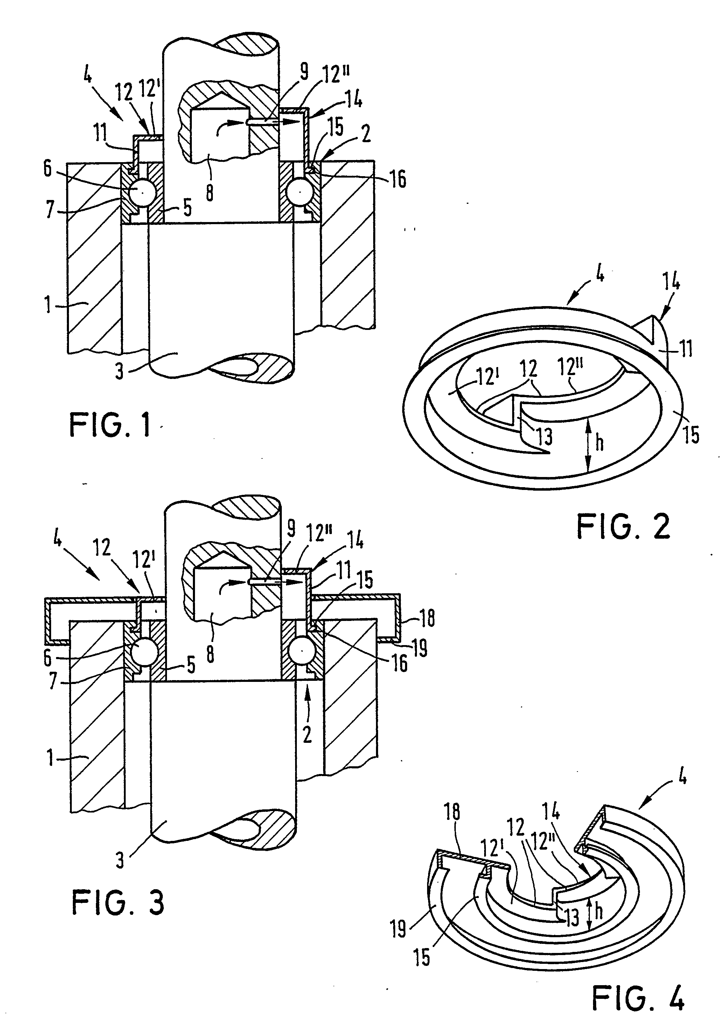

In den Figuren 1 und 3 sind das Lagergehäuse mit 1, das obere Lager mit 2, die vertikale Welle mit 3 und die erfindungsgemäße Abdeckung mit 4 bezeichnet. Die Welle 3 stützt sich über den rotierenden Lagerring 5, die Wälzkörper 6 und den feststehenden Lagerring 7 im Lagergehäuse 1 ab. Die Welle weist einen zentralen Kanal 8 auf, der von einer unteren Ölaufnahme bis in die Höhe der Ölaustrittsöffnung 9 reicht. Diese Ölaustrittsöffnung 9 ist oberhalb des oberen Lagers 2 angeordnet. Das untere Lager und die Art und Weise, wie das Öl aus einem Ölsumpf in den Ölförderkanal 8 gelangt (z. B. mit Hilfe einer konischen Ausbildung des unteren Abschnittes des Ölförderkanals 8), sind im einzelnen nicht dargestellt.

Die obere Abdeckung 4 weist einen zylindrischen Abschnitt 11 auf, der mit dem oberen, nach innen gerichteten Rand 12 ausgerüstet ist. Der Rand 12 umfaßt die Welle 3 mit möglichst geringem Abstand. Der zylindrische Abschnitt 11 hat über einen Teil seines Umfanges eine vergrößerte Höhe h (Figuren 2 und 4). Der Rand 12 weist dadurch einen tiefer gelegenen Teil $12'$ und einen höher gelegenen Teil $12''$ auf. Die beiden Teile $12'$ und $12''$ sind durch vertikal gerichtete Abschnitte 13 miteinander verbunden. Die Ölaustrittsöffnung 9 ist so angeordnet, daß sie sich oberhalb des unteren Teiles $12'$ und unterhalb des oberen Teiles $12''$ des Randes 12 befindet.

Da der Rand 12 bzw. die Randteile $12'$ und $12''$ den Ringspalt zwischen dem feststehenden Lagerring 7 und dem rotierenden Lagerring 5 überdekken, ist das Lager weitestgehend vor eintretenden Schmutzpartikeln geschützt. Aus der mit der Welle 3 rotierenden Ölaustrittsöffnung 9 wird kontinuierlich Öl abgespritzt. Nur ein Teil dieses Öls gelangt in das Ölfangsegment 14, das vom höher liegenden Rand 12″, den Vertikalabschnitten 13 und dem erhöhten Abschnitt des zylindrischen Teiles 11 gebildet wird. Die Umfangserstreckung des Ölfangsegmentes 14 ist entscheidend für den Anteil des Öls, das zum Lager 2 gelangt. Mit Hilfe des Ölfangsegmentes ist deshalb die zum Lager 2 gelangende Ölmenge dosierbar.

Zur Halterung der Abdeckung 4 ist der zylindrische Abschnitt 11 an seiner dem nach innen gerichteten 12 gegenüberliegenden Seite mit einer nach außen gerichteten Kante 15 ausgerüstet, der nach Art eines Sprengringes in eine nach innen gerichtete Nut 16 im feststehenden Lagerring 7 eingreift. Ein sicherer Halt der Abdeckung 4 ist dadurch gewährleistet.

Die Figuren 3 und 4 zeigen eine Alternative zur Halterung der Abdeckung 4. Sie ist mit einem Ansatz 18 ausgerüstet, der mit einer nach innen gerichteten Kante 19 das obere Ende des Lagergehäuses 1 klemmend umgreift. Beim Ausführungsbeispiel nach den Figuren 3 und 4 sind sowohl die Sprengringkante 15 als auch der Ansatz 18 vorhanden.

Die Erfindung wurde anhand eines Ausführungsbeispieles mit vertikaler Welle erläutert. Auch bei geneigten und horizontal angeordneten Wellen ist der Einsatz der erfindungsgemäßen Abdeckung 4 sinnvoll, und zwar immer dann, wenn ein Lager vor eindringenden Schmutzpartikeln geschützt werden soll und/oder wenn nur ein Teil des durch die Ölaustrittsöffnung 9 abgespritzten Öls dem Lager zugeführt werden soll. Falls erforderlich, kann auch beiden Lagerungen einer Welle eine erfindungsgemäße Abdeckung zugeordnet sein.

## Ansprüche

1. Welle (3) mit einem zentralen Kanal (8) für die Versorgung von Wellenlagern (5, 6, 7) mit Öl und mit einer im Bereich eines Wellenlagers (2) befindlichen Ölaustrittsöffnung (9), dadurch gekennzeichnet, daß dem Wellenlager (5, 6, 7) eine Abdeckung (14) zugeordnet ist, die einen zylindrischen Abschnitt (11) mit einem nach innen gerichteten Rand (12) aufweist, welcher die Welle (3) berührungslos umfaßt und den Ringspalt zwischen dem feststehenden (7) und dem rotierenden (5) Lagerring überdeckt, daß der zylindrische Abschnitt (11) über einen Teil seines Umfanges eine vergrößerte Höhe (h) hat und daß sich die Ölaustrittsöffnung zwischen dem unteren (12′) und dem oberen (12″) Teil des nach innen gerichteten Randes der Abdeckung befindet.

2. Welle nach Anspruch 1, dadurch gekennzeichnet daß der zylindrische Abschnitt (11) an seiner dem nach innen gerichteten Rand (12) gegenüberliegenden Seite eine nach außen gerichtete Kante (15) aufweist, mit der die Abdeckung am feststehenden Lagerring klemmend befestigt ist.

3. Welle nach Anspruch, dadurch gekennzeichnet, daß der feststehende Lagerring (7) eine nach innen gerichtete Nut (16) für die Kante (15) aufweist.

4. Welle nach Anspruch 1, 2 oder 4, dadurch gekennzeichnet, daß die Abdeckung mit einem äußeren, das obere Ende des Lagergehäuses (1) klemmend umgreifenden Ansatz (18) ausgerüstet ist.

5. Welle nach einem der Ansprüche 1 bis 4, dadurch gekennzeichnet, daß sie vertikal angeordnet ist.

6. Turbomolekularvakuumpumpe, gekennzeichnet durch eine Welle (3) und einer Abdeckung (4) nach einem der Ansprüche 1 bis 5.

7 Abdeckung, gekennzeichnet durch die Merkmale nach einem der Ansprüche 1 bis 5.

FIG. 1

FIG. 2

FIG. 3

FIG. 4